# EUROPEAN PATENT APPLICATION

(11) **EP 4 697 490 A1**
(43) Date of publication of application: **18.02.2026**
(21) Application number: 24894523.0
(22) Date of filing: 15.11.2024
(51) Int. Cl.: H01M 50/569, H01M 50/284, H01M 50/213, H01M 50/249

(54) **BATTERY MODULE HAVING IMPROVED STRUCTURE AND BATTERY PACK INCLUDING SAME**

(30) Priority: 20.11.2023 KR 20230160425; 13.09.2024 KR 20240125583
(71) Applicant: LG Energy Solution, Ltd., Seoul 07335 (KR)
(72) Inventor: LEE, Hyun Jong, Daejeon 34122 (KR); YANG, Seung Min, Daejeon 34122 (KR); YOON, Hyoung Chul, Daejeon 34122 (KR)
(74) Representative: Plasseraud IP
(86) International application number: PCT/KR2024/018048
(87) International publication number: WO 2025/110630

(57) **Abstract**

Disclosed are a battery module having an improved structure and a battery pack including the same, and more particularly a battery module having an improved structure, the battery module including a plurality of cylindrical battery cells, a module case accommodating the plurality of cylindrical battery cells, a PCB assembly disposed above the plurality of cylindrical battery cells, and a connection portion configured to electrically connect the plurality of cylindrical battery cells and the PCB assembly to each other, wherein the PCB assembly includes a PCB body plate and a first sensing pattern portion provided on one surface of the PCB body plate, and a battery pack including the same.

## Description

### [Technical Field]

This application claims the benefit of priority to Korean Patent Application No. 2023-0160425 filed on November 20, 2023 and Korean Patent Application No. 2024-0125583 filed on September 13, 2024, the disclosure of which is incorporated herein by reference in its entirety.

The present invention relates to a battery module having an improved structure and a battery pack including the same, and more particularly to a battery module having an improved structure in which manufacturing efficiency is improved when the battery module is manufactured and a battery pack including the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

When such secondary batteries are manufactured, multiple processes are performed due to the complex structure thereof, resulting in long manufacturing time and high manufacturing cost.

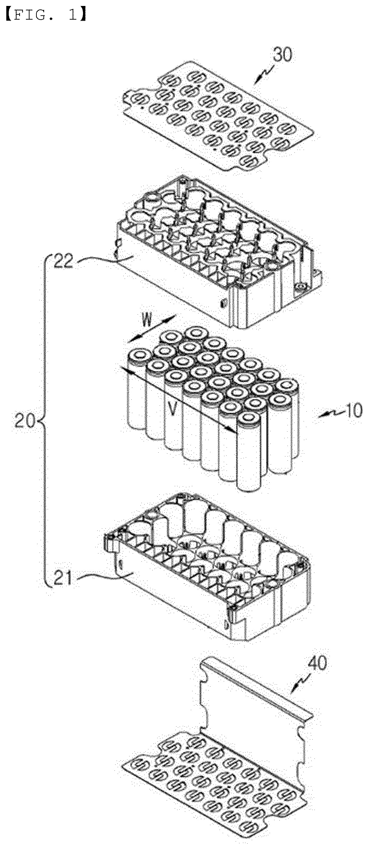

FIG. 1 is an exploded perspective view of a conventional battery module.

As shown in FIG. 1, the battery module includes a plurality of cylindrical battery cells 10, a module housing 20 accommodating the plurality of cylindrical battery cells 10, and busbars 30 and 40 configured to electrically connect the accommodated cylindrical battery cells 10 to each other.

The conventional battery module has a problem that a part of each of the busbars 30 and 40 is in contact with the cylindrical battery cells 10 in a narrow area and additional connecting members, such as harnesses and connecting lines, are required for connection with a sensing device configured to sense the voltage and current of the accommodated cylindrical battery cells 10, thereby increasing the manufacturing cost.

In addition, since a process such as soldering is performed for connection of the connecting lines, additional manufacturing time is consumed and the connecting lines occupy some of the volume of the battery module, resulting in a decrease in energy density.

### (Prior Art Document)

(Patent Document 1) Korean Patent Application Publication No. 2019-0142581

### [Disclosure]

### [Technical Problem]

The present invention has been made in view of the above problems, and it is an object of the present invention to provide a battery module having an improved structure capable of simplifying the structure of some of the configuration of the battery module, thereby shortening the manufacturing time and reducing the manufacturing cost, and a battery pack including the same.

It is another object of the present invention to provide a battery module having an improved structure in which an increase in volume of the battery module is minimized by simplifying the structure of the battery module, thereby improving energy density, and a battery pack including the same.

### [Technical Solution]

A battery module according to the present invention to accomplish the above objects includes a plurality of cylindrical battery cells (100), a module case (200) accommodating the cylindrical battery cells (100), a PCB assembly (300) disposed above the plurality of cylindrical battery cells (100), and a connection portion (400) configured to electrically connect the plurality of cylindrical battery cells (100) and the PCB assembly (300) to each other, wherein the PCB assembly (300) includes a PCB body plate (310) and a first sensing pattern portion (320) provided on one surface of the PCB body plate (310).

Also, in the battery module according to the present invention, the PCB assembly (310) may have an opening (311) defined at a position corresponding to an upper surface of each of the plurality of cylindrical battery cells (100), the opening being formed by incising a part of the PCB assembly.

Also, in the battery module according to the present invention, the opening (311) may have an area exposing only a part of the upper surface of the plurality of cylindrical battery cells (100).

Also, in the battery module according to the present invention, the plurality of cylindrical battery cells (100) and the PCB assembly (300) may be disposed so as to partially overlap each other on a vertical extension line.

Also, in the battery module according to the present invention, the first sensing pattern portion (320) may include a voltage sensing pattern configured to sense a voltage of each of the plurality of cylindrical battery cells (100).

Also, in the battery module according to the present invention, the first sensing pattern portion (320) may include a current sensing pattern configured to sense a current of each of the plurality of cylindrical battery cells (100).

Also, in the battery module according to the present invention, the first sensing pattern portion (320) may disposed on an area of the PCB body plate (310).

Also, in the battery module according to the present invention, the PCB body plate (310) and the first sensing pattern portion may be integrally formed.

Also, in the battery module according to the present invention, the connection portion (400) may be a wire.

Also, in the battery module according to the present invention, a second sensing pattern portion may be further disposed on one surface of the first sensing pattern portion.

Also, in the battery module according to the present invention, the PCB body plate, the first sensing pattern portion, and the second sensing pattern portion may be integrally formed.

In addition, the present invention provides a battery pack including the battery module.

In addition, the present invention provides a device having the battery pack mounted therein.

### [Advantageous Effects]

A battery module having an improved structure according to the present invention and a battery pack including the same have the advantage that a PCB assembly is provided with a first sensing pattern portion, whereby a conventional process of electrically connecting a PCB to a sensor configured to sense the voltage or the like is omitted, and therefore it is possible to reduce the manufacturing time.

In addition, the battery module having the improved structure according to the present invention and the battery pack including the same have the advantage that the PCB assembly is formed so as to overlap a part of a battery cell accommodated in a module case on a vertical extension line, and therefore it is possible to prevent separation of the battery cell in a vertical direction.

### [Description of Drawings]

FIG. 1 is an exploded perspective view showing a conventional battery module.
FIG. 2 is a perspective view showing a battery module according to a first preferred embodiment of the present invention.
FIG. 3 is an exploded perspective view showing the battery module according to the first preferred embodiment of the present invention.
FIG. 4 is a vertical sectional view of the battery module according to the first preferred embodiment of the present invention.
FIG. 5 is an exploded perspective view showing a battery module according to a second preferred embodiment of the present invention.
FIG. 6 is a vertical sectional view of the battery module according to the second preferred embodiment of the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module having an improved structure according to the present invention and a battery pack including the same will be described with reference to the accompanying drawings.

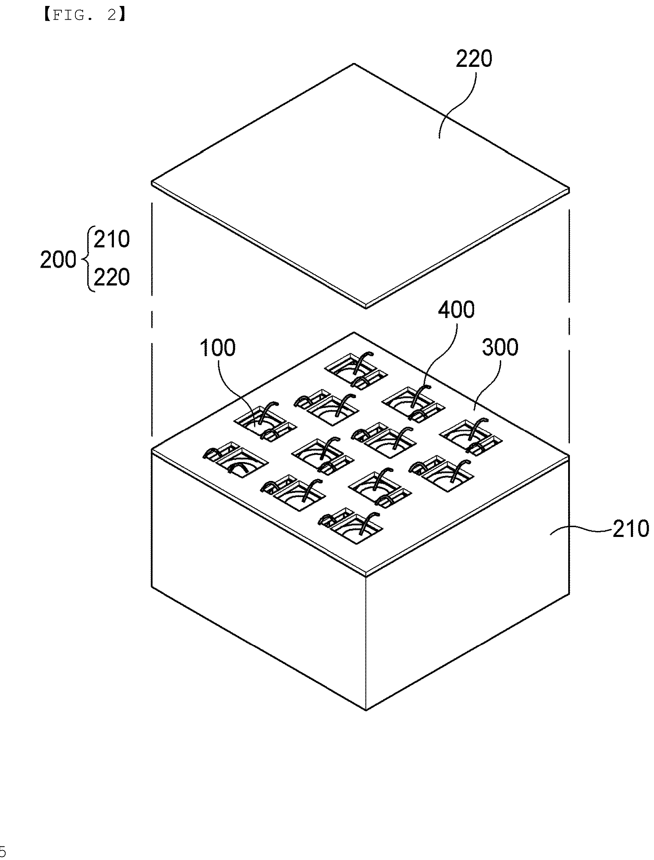

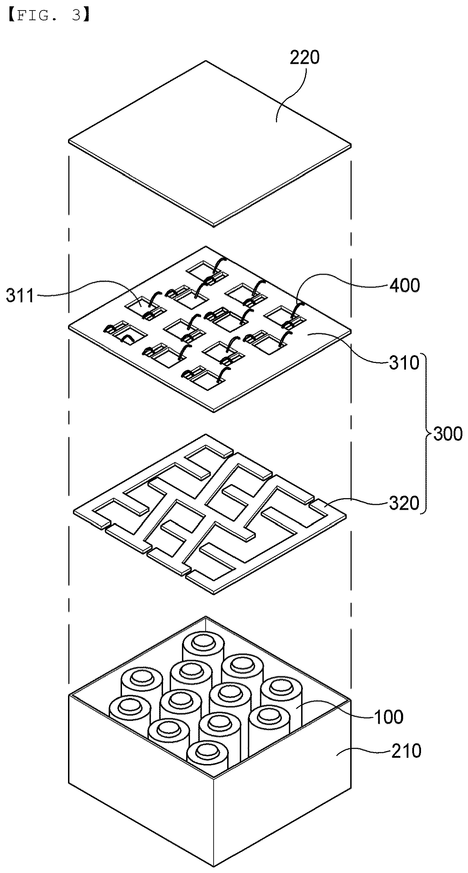

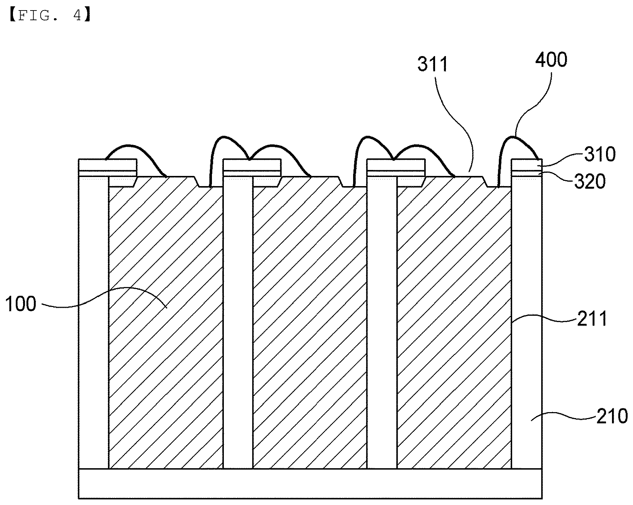

FIG. 2 is a perspective view showing a battery module according to a first preferred embodiment of the present invention, FIG. 3 is an exploded perspective view showing the battery module according to the first preferred embodiment of the present invention, and FIG. 4 is a vertical sectional view of the battery module according to the first preferred embodiment of the present invention.

As shown in FIGs. 2 to 4, the battery module according to the present invention includes a cylindrical battery cell 100, a module case 200, a PCB assembly 300, and a connection portion 400.

First, the cylindrical battery cell 100 includes an electrode assembly, a cap assembly, and a cylindrical battery case accommodating the electrode assembly and the cap assembly.

The electrode assembly is a jelly-roll type electrode assembly, which is configured to have a structure in which a long sheet type positive electrode and a long sheet type negative electrode are wound in the state in which a separator is interposed therebetween.

The positive electrode includes a positive electrode current collector and a positive electrode active material applied to each of an upper surface and a lower surface of the positive electrode current collector.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; Fe₂(MoO₄)₃, or LiNiₓMn₂₋ₓO₄ (0.01 ≤ x ≤ 0.6) may be used as the positive electrode active material.

Meanwhile, the positive electrode active material may be mixed with a conductive agent and a binder, and a filler may be further added as needed.

The conductive agent is generally added in an amount of 1 to 50 wt% based on the total weight of the mixture including the positive electrode active material. The conductive agent is not particularly restricted as long as the conductive agent exhibits high conductivity while the conductive agent does not induce any chemical change in a battery. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder is a component assisting in binding between the positive electrode active material and the conductive agent and in binding with the current collector. The binder is generally added in an amount of 1 to 50 wt% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

Meanwhile, a positive electrode tab, which is connected to an uncoated portion (not shown) of the positive electrode and extends upward by a predetermined length, is electrically connected to the cap assembly.

The negative electrode includes a negative electrode current collector and a negative electrode active material applied to each of an upper surface and a lower surface of the negative electrode current collector.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy.

In addition, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material, or a Si-based material, such as Si, SiO, SiO₂, or a mixture thereof; however, the present invention is not limited thereto.

Of course, the negative electrode active material may be further mixed with a conductive agent and a binder, and the negative electrode current collector may be coated with the mixture.

The conductive agent is a component configured to further improve conductivity of the negative electrode active material, and carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used in a certain proportion.

The binder is a component assisting in binding between the negative electrode active material and the conductive agent and in binding with the current collector, and may include at least one selected from the group consisting of styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM).

Meanwhile, a negative electrode tab, which is connected to an uncoated portion of the negative electrode and extends downward by a predetermined length, is electrically connected to the cylindrical battery case, more specifically to a bottom surface.

The separator prevents short circuit between the positive electrode and the negative electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

An insulating member may be located on each of the top and the bottom of the electrode assembly accommodated in the cylindrical battery case, and the insulating member serves to insulate between the electrode assembly and the cap assembly and between the electrode assembly and the cylindrical battery case.

The cap assembly is located on the top of the electrode assembly, is electrically connected to a positive electrode tab of the electrode assembly, and is coupled to an upper end of the cylindrical battery case, which is open, to seal the electrode assembly accommodated in the cylindrical battery case.

Specifically, in the cap assembly, a current interrupting member, a current interrupting gasket, a safety vent, a PTC element, and a top cap are sequentially stacked from the bottom, and a crimping gasket is located at outer edges of the current interrupting member and the top cap.

The current interrupting member, which is also called a current interrupt device (CID), is located on the top of the electrode assembly, and the positive electrode tab is connected to a lower surface of the current interrupting member at a predetermined position. Although the current interrupting member is shown as being flat in the figures, a central part of the current interrupting member may be convex upward.

The safety vent, which is formed to protrude downward in the center and has one or more notches, is located on the top of the current interrupting member. The safety vent interrupts current and exhausts the gas in the event of an increase in pressure in the cylindrical battery case, and is disposed such that one surface of the safety vent is in contact with the PTC element and an edge surface of the safety vent is in contact with the crimping gasket.

The current interrupting gasket is located such that the current interrupting member and the safety vent remain electrically isolated from each other except for downwardly protruding portions of the current interrupting member and the safety vent.

The positive temperature coefficient (PTC) element, which interrupts the current when the temperature in the battery rises and the resistance increases, is in contact with the safety vent on one side of the edge thereof and in contact with an inner surface of the edge of the top cap on the other side of the edge thereof.

In the case of a cylindrical secondary battery, gas is generated due to various causes, such as external impact, whereby the internal pressure of the battery increases, which may lead to ignition or explosion.

The current interrupting member and the safety vent are configured to facilitate the discharge of gas that causes the internal pressure of the battery to increase, and when the internal pressure of the battery exceeds a predetermined level, predetermined parts of the current interrupting member and the safety vent are broken to prevent explosion.

The top cap located at the uppermost side seals the upper open end of the battery case and forms a positive electrode terminal, and one or more venting holes are formed in the top cap, whereby, when venting gas is generated in the cylindrical battery case, the venting gas may be released to the outside to prevent explosion.

The cylindrical battery case accommodates the electrode assembly and the cap assembly, and a negative electrode tab extends downward and is connected to the bottom of the cylindrical battery case such that the bottom of the cylindrical battery case can act as a negative electrode.

As described above, the crimping portion, which is configured to seal the cap assembly while wrapping around an outer side surface of the cap assembly, is provided at an upper end of the cylindrical battery case, and an inwardly indented beading portion is provided under the crimping portion to securely fix the electrode assembly and the cap assembly while protecting the electrode assembly and the cap assembly from external impact.

The module case 200 accommodates the plurality of cylindrical battery cells 100 and the PCB assembly 300, which electrically connects the cylindrical battery cells 100 to each other, to protect the same from external impact and foreign matter.

The module case 200 may include a lower module case 210 having a hexahedral shape with an open one side and an upper module case 220 located on the open one side of the lower module case 210.

Each of the lower module case 210 and the upper module case 220 may be made of a lightweight plastic material having certain rigidity, and is not particularly restricted as long as it is possible to protect components accommodated therein from external impact and foreign matter.

Next, the PCB assembly 300 is located above the cylindrical battery cell 100, and may include a PCB body plate 310 and a first sensing pattern portion 320.

The PCB body plate 310 may be a flat plate having an electrical circuit printed thereon, and may be made of a material having certain flexibility for free connection.

The PCB body plate 310 may include an opening 311 formed at the position corresponding to the upper surface of the cylindrical battery cell 100, the opening being formed by incising a part of the PCB body plate.

The opening 311 is formed so as to have an area to expose only a part of the cylindrical battery cell, and therefore the opening may serve as a passageway for the connection portion 400, a description of which will follow, contacts the cylindrical battery cell 100.

The opening 311 of the PCB assembly 300 is located so as to overlap a part of the cylindrical battery cell 100 on a vertical extension line, whereby the region of the PCB assembly 300 overlapping the region of the cylindrical battery cell 100 not exposed by the opening 311 on the vertical extension line is formed, and therefore it is possible to prevent separation of the cylindrical battery cell 100 in a vertical direction.

The first sensing pattern portion 320 is located on one surface of the PCB body plate 310, may be integrally formed with the PCB body plate 310, and may be provided with various types of sensing patterns.

The first sensing pattern portion 320 may be formed in the region of the PCB body plate 310 on the vertical extension line, because, if the first sensing pattern portion is formed outside the region of the PCB body plate 310 on the vertical extension line, the first sensing pattern portion may block a part of the opening 311, whereby connection between the cylindrical battery cell 100 and the PCB assembly 300 via the connection portion 400 may be impossible.

In addition, the first sensing pattern portion 320 is provided with a voltage sensing pattern configured to sense the voltage, a temperature sensing pattern configured to sense the temperature, a resistance sensing pattern configured to sense the resistance, and a current sensing pattern configured to sense the current, whereby it is possible to omit harnesses and connection lines configured to connect a sensing device and the PCB assembly 300 to each other in order to sense the voltage and the current, unlike the prior art, and therefore it is possible to shorten the manufacturing time and to reduce the manufacturing cost.

In addition, the volume of the battery module is reduced due to omission of the harnesses and the connecting lines for connection, thereby improving energy density.

The connection portion 400 electrically connects the cylindrical battery cell 100 and the PCB assembly 300 to each other.

The connection portion 400 may be a wire, is connected by wire bonding, and is less likely to break when a part of the cylindrical battery cell 100 is moved, compared to a bar-shaped connection portion 400.

In addition, the connection portion 400 made of a wire has the advantage that the cylindrical battery cell 100 and the PCB assembly 300 are more easily connected to each other, since the wire is somewhat free to move.

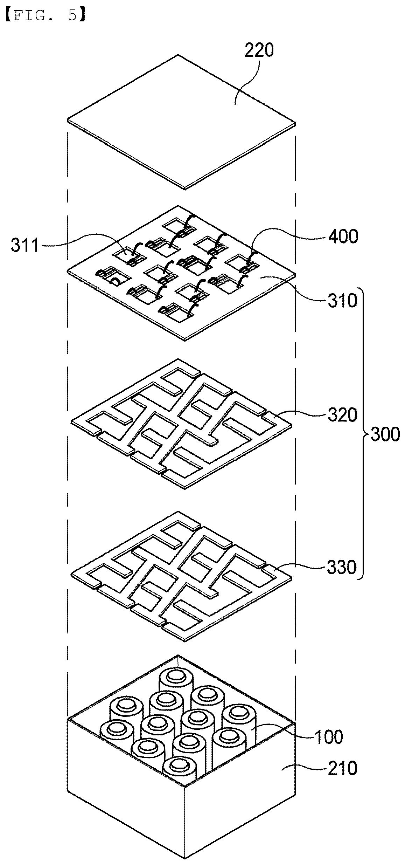

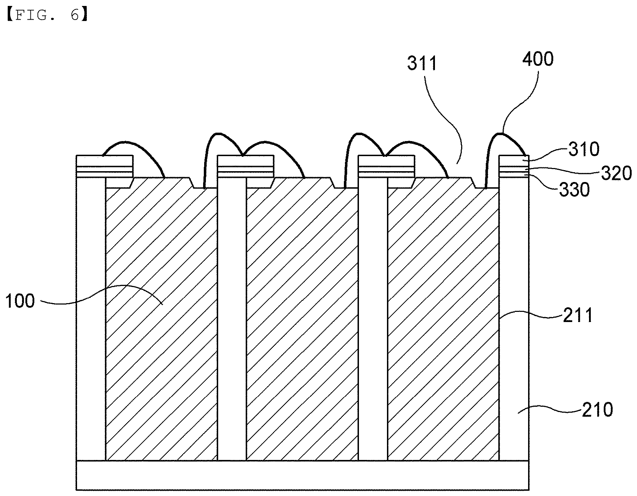

FIG. 5 is an exploded perspective view showing a battery module according to a second preferred embodiment of the present invention, and FIG. 6 is a vertical sectional view of the battery module according to the second preferred embodiment of the present invention.

Referring to FIGs. 5 and 6, the battery module according to the second preferred embodiment of the present invention is identical to the battery module according to the first embodiment described with reference to FIGs. 2 to 4, except that a second sensing pattern portion 330 is further provided, and therefore a description of the same configuration will be omitted.

In the battery module according to the second embodiment, a PCB assembly 300 includes a PCB body plate 310, a first sensing pattern portion 320, and a second sensing pattern portion 330.

The second sensing pattern portion 330 is located on one surface of the first sensing pattern portion 320, may be integrally formed with the PCB body plate 310, and may be provided with various types of sensing patterns.

The second sensing pattern portion 330 may be formed in the region of the PCB body plate 310 on a vertical extension line, because, if the second sensing pattern portion is formed outside the region of the PCB body plate 310 on the vertical extension line, the second sensing pattern portion may block a part of an opening 311, whereby connection between a cylindrical battery cell 100 and the PCB assembly 300 via a connection portion 400 may be impossible.

The first sensing pattern portion 320 may be provided with any one of a voltage sensing pattern configured to sense the voltage, a temperature sensing pattern configured to sense the temperature, a resistance sensing pattern configured to sense the resistance, and a current sensing pattern configured to sense the current, and the second sensing pattern portion 330 may be provided with another sensing pattern that is not formed on the first sensing pattern portion 320.

When the first sensing pattern portion 320 and the second sensing pattern portion 330 are provided, it is possible to omit harnesses and connection lines configured to connect a sensing device and the PCB assembly 300 to each other in order to sense the voltage, the temperature, the resistance, and the current, unlike the prior art, and therefore it is possible to shorten the manufacturing time and to reduce the manufacturing cost.

In addition, although FIGs. 5 and 6 show a structure in which the second sensing pattern portion 330, the first sensing pattern portion 320, and the PCB body plate 310 are sequentially stacked from below, it is also possible to provide a structure in which the first sensing pattern portion 320, the second sensing pattern portion 330, and the PCB body plate 310 are sequentially stacked from below.

The present invention provides a battery pack including the battery module and a device including the battery pack. The device may be, for example, an electric vehicle, an electric motorcycle, or an electric kickboard.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Numerals)

- 100:: Battery cell
- 200:: Module case
- 210:: Lower module case
- 211:: Receiving hole
- 220:: Upper module case
- 300:: PCB assembly
- 310:: PCB body plate
- 311:: Opening
- 320:: First sensing pattern portion
- 330:: Second sensing pattern portion
- 400:: Connection portion

## Claims

1. A battery module comprising:
a plurality of cylindrical battery cells;
a module case accommodating the plurality of cylindrical battery cells;
a PCB assembly disposed above the plurality of cylindrical battery cells; and
a connection portion configured to electrically connect the plurality of cylindrical battery cells and the PCB assembly to each other,
wherein the PCB assembly comprises a PCB body plate and a first sensing pattern portion provided on one surface of the PCB body plate.

2. The battery module according to claim 1, wherein the PCB assembly has an opening defined at a position corresponding to an upper surface of each of the plurality of cylindrical battery cells, the opening being formed by incising a part of the PCB assembly.

3. The battery module according to claim 2, wherein the opening has an area exposing only a part of the upper surface of the plurality of cylindrical battery cells.

4. The battery module according to claim 2, wherein the plurality of cylindrical battery cells and the PCB assembly are disposed so as to partially overlap each other on a vertical extension line.

5. The battery module according to claim 2, wherein the first sensing pattern portion includes a voltage sensing pattern configured to sense a voltage of each of the plurality of cylindrical battery cells.

6. The battery module according to claim 2, wherein the first sensing pattern portion includes a current sensing pattern configured to sense a current of each of the plurality of cylindrical battery cells.

7. The battery module according to claim 2, wherein the first sensing pattern portion is disposed on an area of the PCB body plate.

8. The battery module according to claim 1, wherein the PCB body plate and the first sensing pattern portion are integrally formed.

9. The battery module according to claim 1, wherein the connection portion is a wire.

10. The battery module according to claim 1, wherein a second sensing pattern portion is further disposed on one surface of the first sensing pattern portion.

11. The battery module according to claim 10, wherein the PCB body plate, the first sensing pattern portion, and the second sensing pattern portion are integrally formed.

12. A battery pack comprising the battery module according to any one of claims 1 to 11.

13. A device having the battery pack according to claim 12 mounted therein.
